# EUROPEAN PATENT SPECIFICATION

(11) **EP 2 429 256 B1**
(45) Date of publication and mention of the grant of the patent: **16.12.2015**
(21) Application number: 10785661.9
(22) Date of filing: 19.01.2010
(51) Int. Cl.: H04L 12/58, H04L 29/06

(54) **METHOD FOR NEGOTIATING MESSAGE SESSION RELAY PROTOCOL CONNECTION PARAMETERS**
VERFAHREN ZUR AUSHANDLUNG VON MESSAGE SESSION RELAY PROTOCOL VERBINDUNGSPARAMETERN
PROCÉDÉ DE NÉGOCIATION DE PARAMÈTRES DE CONNEXION SOUS MESSAGE SESSION RELAY PROTOCOL

(30) Priority: 10.06.2009 CN 200910108037
(43) Date of publication of application: 14.03.2012
(73) Proprietor: ZTE Corporation, Shenzhen, Guangdong 518057 (CN)
(72) Inventor: LU, Yan, Shenzhen Guangdong 518057 (CN); ALI, Ghazanfar, Shenzhen Guangdong 518057 (CN); CHEN, Jun, Shenzhen Guangdong 518057 (CN); YAO, Lizhe, Shenzhen Guangdong 518057 (CN); XIE, Man, Shenzhen Guangdong 518057 (CN); GUO, Huan, Shenzhen Guangdong 518057 (CN)
(74) Representative: Willquist, Sofia Ellinor
(86) International application number: PCT/CN2010/070260
(87) International publication number: WO 2010/142148

(56) References cited:
- EP-A1- 1 936 891
- CN-A- 1 801 814
- CN-A- 101 247 388
- CN-A- 101 369 904
- CN-A- 101 369 904
- CAMPBELL B ET AL: "The Message Session Relay Protocol (MSRP); rfc4975.txt", 20070901, 1 September 2007 (2007-09-01), XP015052511, ISSN: 0000-0003
- "OMA Converged IP Messaging System Description ; OMA-TS-CPM_System_Description-V1_0-2010031 2-D", OMA-TS-CPM_SYSTEM_DESCRIPTION-V1_0-2010031 2-D, OPEN MOBILE ALLIANCE (OMA), 4330 LA JOLLA VILLAGE DR., SUITE 110 SAN DIEGO, CA 92122 ; USA , no. 1.0 12 March 2009 (2009-03-12), pages 1-113, XP064049800, Retrieved from the Internet: URL:ftp/Public_documents/COM/COM-CPM/Perma nent_documents/ [retrieved on 2010-03-12]
- HANDLEY UCL V JACOBSON PACKET DESIGN C PERKINS UNIVERSITY OF GLASGOW M: "SDP: Session Description Protocol; rfc4566.txt", 20060701, 1 July 2006 (2006-07-01), XP015055003, ISSN: 0000-0003
- "Converged IP Messaging Architecture ; OMA-AD-CPM-V1_0-200710xx-D", OMA-AD-CPM-V1_0-200710XX-D, OPEN MOBILE ALLIANCE (OMA), 4330 LA JOLLA VILLAGE DR., SUITE 110 SAN DIEGO, CA 92122 ; USA , no. 1.0 4 October 2007 (2007-10-04), pages 1-37, XP064045662, Retrieved from the Internet: URL:ftp/Public_documents/COM/COM-CPM/2007/ [retrieved on 2007-10-18]

## Description

### Technical Field

The present invention relates to the field of converged IP messaging (CPM) communication, and more particularly, to a method for negotiating message session relay protocol (MSRP) connection parameters used in a process of transmitting a large message mode CPM message.

### Background of the Related Art

A purpose of converged IP messaging (CPM), which is proposed by the Open Mobile Architecture (OMA) in 2005, is to achieve the interworking among a variety of message services, provide a unified message service and improve information service experience. The CPM integrates many existing message services, including Instant Message (IM), Push-To-Talk over Cellular (POC), Mobile E-Email (MEM), Short Messaging Service (SMS), Multimedia Messaging Service (MMS), etc.

Main service modes of the CPM comprise pager-mode based CPM, session-mode based Large Message Mode CPM Message, and other session based CPM Session Services. Before users use these services normally, they need to log on to a CPM system, which is known as "on-line" generally.

Pager-mode messages are transferred between CPM Clients and CPM Enablers at both a transmitting side and a receiving side using a Session Initiation Protocol (SIP) message (SIP message). When a terminal at the transmitting side needs to send a large message mode CPM message, if the size of the message exceeds a limit (for example, is larger than 1300 bytes), the message cannot be carried by the SIP message.

The CPM services support CPM Pre-defined Group and CPM Ad-hoc Group. CPM users may send CPM paging messages to a CPM pre-defined group or a CPM ad-hoc group. When the size of the message exceeds a certain limit, however, it cannot be carried by the SIP message.

A transmission path of the large message mode CPM message can be divided into a signaling path and a media path, that is, signaling is transmitted along the signaling path, and media is transmitted along the media path. When the large message mode CPM message is transmitted, a session invite message (INVITE) of the large message mode CPM message is used to establish a session between a CPM client at the transmitting side and a CPM client at the receiving side to complete media negotiation and establish a transmission link between the CPM client at the transmitting side and the CPM client at the receiving side, use the Message Session Relay Protocol (MSRP) to send media content of the large message mode CPM message, i.e., content of the CPM message, to the CPM client at the receiving side via the established transmission link.

According to a system framework of the CPM, at the service level, the signaling path along which large messages of the CPM are transmitted is required to pass the CPM client at the transmitting side, the transmitting side belonged originating participation function entity, the receiving side belonged terminating participation function entity, and the CPM client at the receiving side. There are two schemes for establishing the media path of the CPM, one being to establish the media path between the CPM clients without passing the participation function entities and control function entities, the other needing passing the participation function entities.

When the scheme of passing the participation function entities is used to implement the establishing of the media path, the media path should be established between the CPM client at the transmitting side and the originating participation function entity, between the originating participation function entity and the terminating participation function entity, and between the terminating participation function entity and the CPM client at the receiving side so as to achieve multiple hops transmission of the MSRP. However, currently there is no method for each function entity to know an adjacent function entity that establishes a link therewith yet, that is, each function entity cannot acquire the MSRP connection parameters (including information of IP address, port number and/or MSRP URI) of the entities with which it establishes a link, thus going against the negotiation of the connection parameters required to establish the MSRP multiple hops transmission path between various function entities.

The features of the preamble of the independent claims are known from Campbell B et al: "The Message Session Relay Protocol (MSRP); rfc4975.txt". Relative technologies are also known from "OMA Converged IP Messaging System Description; 0MA-TS-CPM_System_Description-V1_0-20100312-D",
OMA-TS-CPM_System_Description-V1_0-201G0312-D, Open Mobile Alliance (OMA); EP 1 936 891 A1; and Handley UCL V Jacobson Packet Design C Perkins University of Glasgow M: "SDP: Session Description Protocol; rfc4566.txt".

### Content of the Invention

In view of this, the present invention provides a method for negotiating MSRP connection parameters so as to solve the problem in the prior art that the connection parameters required to establish a MSRP multiple hops transmission path cannot be negotiated between various function entities when a large message mode CPM message is transmitted.

The features of the method according to the present invention are defined in the independent claims.

A method for negotiating MSRP connection parameters comprises:
completing the negotiation of the MSRP parameters via a SDP negotiation process between a CPM client at the transmitting side, an originating participation function entity, a terminating participation function entity and a CPM client at the receiving side.

The SDP negotiation process comprises:
the CPM client at the transmitting side sending a first session invite message of a large message mode CPM message to the originating participation function entity, the first session invite message carrying a first SDP datagram;
after receiving the first session invite message, the originating participation function entity generating and sending a second session invite message to the terminating participation function entity, the second session invite message carrying a second SDP datagram;
after receiving the second session invite message, the terminating participation function entity generating and sending a third session invite message to the CPM client at the receiving side, the third session invite message carrying a third SDP datagram;
after receiving the third session invite message, the CPM client at the receiving side generating and sending a third success response message to the terminating participation function entity, the third success response message carrying a third response SDP datagram;
after receiving the third success response message, the terminating participation function entity generating and sending a second success response message to the originating participation function entity, the second success response message carrying a second response SDP datagram; and
after receiving the second success response message, the originating participation function entity generating and sending a first success response message to the CPM client at the transmitting side, the first success response message carrying a first response SDP datagram.

The first session invite message, the second session invite message, the third session invite message, the third success response message, the second success response message and the first success response message are routed via a SIP/IP core network.

The completing the negotiation of the MSRP parameters via the SDP negotiation process comprises:
the CPM client at the transmitting side carrying its MSRP connection parameter information by the first SDP datagram carried in the first session invite message;
the originating participation function entity carrying its MSRP connection parameter information by the second SDP datagram carried in the second session invite message; and
the terminating participation function entity carrying its MSRP connection parameter information by the third SDP datagram carried in the third session invite message.

The completing the negotiation of the MSRP parameters via the SDP negotiation process comprises:
the CPM client at the receiving side carrying its MSRP connection parameter information by the third response SDP datagram carried in the third success response message;
the terminating participation function entity carrying its MSRP connection parameter information by the second response SDP datagram carried in the second success response message; and
the originating participation function entity carrying its MSRP connection parameter information by the first response SDP datagram carried in the first success response message;

The completing the negotiation of the MSRP parameters via the SDP negotiation process comprises:
the CPM client at the transmitting side carrying its MSRP connection parameter information by the first SDP datagram carried in the first session invite message;
the originating participation function entity carrying its MSRP connection parameter information into the second SDP datagram carried in the second session invite message;
the terminating participation function entity carrying its MSRP connection parameter information by the third SDP datagram carried in the third session invite message;
the CPM client at the receiving side carrying its MSRP connection parameter information by the third response SDP datagram carried in the third success response message;
the terminating participation function entity carrying its MSRP connection parameter information by the second response SDP datagram carried in the second success response message; and
the originating participation function entity carrying its MSRP connection parameter information by the first response SDP datagram carried in the first success response message.

The completing the negotiation of the MSRP parameters via the SDP negotiation process comprises:
the originating participation function entity carrying its MSRP connection parameter information by the first response SDP datagram carried in the first success response message;
the terminating participation function entity carrying its MSRP connection parameter information by the third SDP datagram carried in the third session invite message; and
the originating participation function entity carrying its MSRP connection parameter information by the second SDP datagram carried in the second session invite message.

The completing the negotiation of the MSRP parameters via the SDP negotiation process comprises:
the originating participation function entity carrying its MSRP connection parameter information by the first response SDP datagram carried in the first success response message;
the terminating participation function entity carrying its MSRP connection parameter information by the third SDP datagram carried in the third session invite message; and
the terminating participation function entity carrying its MSRP connection parameter information by the second response SDP datagram carried in the second success response message.

The MSRP connection parameter is a uniform resource identifier (URI).

The MSRP connection parameters are an IP address and a port number.

The MSRP connection parameters are a URI, an IP address and a port number.

A MSRP URI is carried in the second session invite message and the third session invite message, which means that:
a value of a path header field in the received first SDP datagram is preserved in the second SDP datagram, and a MSRP URI of the originating participation function entity is added to the most left side of the path header field in the second SDP datagram; a value of a path header field in the received second SDP datagram is preserved in the third SDP datagram, and a MSRP URI of the terminating participation function entity is added to the most left side of the path header field in the third SDP datagram.
or only the MSRP URI of the originating participation function entity is carried in the path header field in the second SDP datagram; and only the MSRP URI of the terminating participation function entity is carried in the path header field in the third SDP datagram.

The IP address is carried using a SDP connection parameter row c-field, and the port number is carried using a SDP media parameter row m-field.

A MSRP URI is carried in the second session invite message and the third session invite message, which means that:
a value of a path header field in the received first SDP datagram is preserved in the second SDP datagram, and a MSRP URI of the originating participation function entity is added to the most left side of the path header field in the second SDP datagram; a value of a path header field in the received second SDP datagram is preserved in the third SDP datagram, and a MSRP URI of the terminating participation function entity is added to the most left side of the path header field in the third SDP datagram.
or only the MSRP URI of the originating participation function entity is carried in the path header field in the second SDP datagram; and only the MSRP URI of the terminating participation function entity is carried in the path header field in the third SDP datagram.

A MSRP URI is carried in the second success response message and the first success response message, which means that:
a value of a path header field in the received third response SDP datagram is preserved in the second response SDP datagram, and a MSRP URI of the terminating participation function entity is added to the most left side of the path header field in the second response SDP datagram; a value of a path header field in the received second response SDP datagram is preserved in the first response SDP datagram, and a MSRP URI of the originating participation function entity is added to the most left side of the path header field in the first SDP datagram;
or only the MSRP URI of the terminating participation function entity is carried in the path header field in the second response SDP datagram; and only the MSRP URI of the originating participation function entity is carried in the path header field in the first response SDP datagram.

The IP address is carried using a SDP connection parameter row c-field, and the port number is carried using a SDP media parameter row m-field.

A MSRP URI is carried in the second success response message and the first success response message, which means that:
a value of a path header field in the received third response SDP datagram is preserved in the second response SDP datagram, and a MSRP URI of the terminating participation function entity is added to the most left side of the path header field in the second response SDP datagram; a value of a path header field in the received second response SDP datagram is preserved in the first response SDP datagram, and a MSRP URI of the originating participation function entity is added to the most left side of the path header field in the first SDP datagram;
or only the MSRP URI of the terminating participation function entity is carried in the path header field in the second response SDP datagram; and only the MSRP URI of the originating participation function entity is carried in the path header field in the first response SDP datagram.

The IP address is carried using a SDP connection parameter row c-field, and the port number is carried using a SDP media parameter row m-field.

Using the aforementioned scheme can solve the problem in the prior art that the negotiation of the MSRP connection parameters cannot be implemented by the MSRP transmission link so as to improve the transmission scheme of the large message mode CPM message.

The other features and advantages of the present invention will be described in the following description, and will become obvious partially from the description or be understood by implementing the present invention. Objects and other advantages of the present invention can be implemented and acquired via the written description, claims and structures specially pointed out in the accompanying figures.

### Brief Description of Drawings

FIG. 1 is a schematic diagram of negotiation of MSRP connection parameters of media transmission links of a large message mode CPM message in accordance with the present invention;
FIG. 2 is a flow chart of negotiation of MSRP connection parameters in a SDP negation process of a large message mode CPM message in accordance with the present invention; and
FIG. 3 is a flow chart of a method for negotiating MSRP connection parameters in accordance with the first embodiment of the present invention.

### Preferred Embodiments of the Present Invention

Since a large message mode CPM message occupies relatively large space, it cannot be directly carried by a SIP message. Unlike a method for transmitting a pager-mode CPM message, a transmission path of the large message mode CPM message is divided into a signaling path and a media path, that is, signaling is transmitted along the signaling path and media is transmitted along the media path. Therefore, in an embodiment of the present invention, when the large message mode CPM message is transmitted, a session invite message (SIP INVITE) of the large message mode CPM message is used to establish a session between a CPM client at the transmitting side and a CPM client at the receiving side to complete media negotiation and establish a transmission link between the CPM client at the transmitting side and the CPM client at the receiving side, use the Message Session Relay Protocol (MSRP) to send media content of the large message mode CPM message, i.e., content of the CPM message, to the CPM client at the receiving side via the established transmission link. Under technical background of the whole technical scheme, the present invention provides a specific implementation scheme for a complete media negotiation.

It should be noted that the large message mode CPM message mentioned in the embodiments of the present invention is a CPM message whose size is larger than a preset threshold (e.g., 1300 bytes) in the CPM specification formulated for the OMA, and this large message mode CPM message cannot be directly carried using the SIP message.

In the case of no conflict, the embodiments in the present application and the features in the embodiments can be combined.

The preferred embodiments of the present invention will be described below in conjunction with the accompanying figures. It should be understood that the preferred embodiments described herein are intended to only illustrate and explain the present invention not to restrict the present invention.

According to one embodiment of the present invention, first, a method is provided for negotiating MSRP parameters of a media transmission link of a large message mode CPM message. Using the method, each function entity participating in a process of transmitting the large message mode CPM message acquires the MSRP connection parameters of an adjacent function entity that establishes a link therewith.

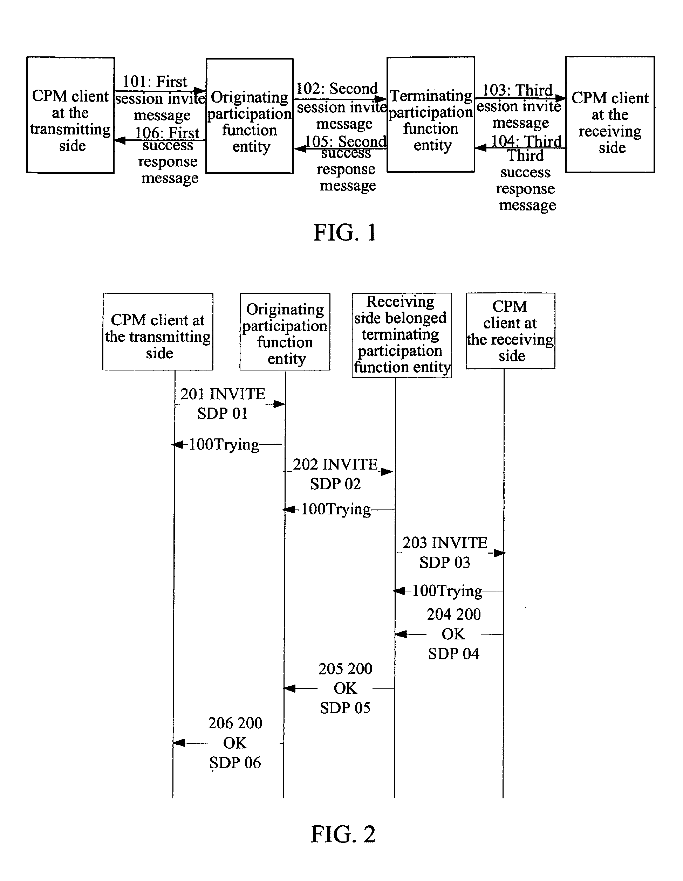

FIG. 1 is a schematic diagram of negotiation of MSRP connection parameters of media transmission links of a large message mode CPM message in accordance with the present invention. As shown in FIG. 1, when a CPM client sends a large message mode CPM message to another CPM client, a process of negotiating the MSRP connection parameters mainly comprises the following steps.

Step 101: a CPM client at a transmitting side sends a first session invite message of the large message mode CPM message carrying a first session description protocol (SDP) datagram. The first session invite message is routed to an originating participation function entity via a SIP/IP core network.

Step 102: after the originating participation function entity receives the first session invite message, it generates and sends a second session invite message carrying a second SDP datagram. The second session invite message is routed to a terminating participation function entity via the SIP/IP core network.

Step 103: after the terminating participation function entity receives a second session invite message, it generates and sends a third session invite message carrying a third SDP datagram. The third session invite message is routed to a CPM client at a receiving side via the SIP/IP core network.

Step 104: after the CPM client at the receiving side receives a third session invite message, it generates and sends a third success response message carrying a third response SDP datagram. The third success response message is routed to the originating participation function entity via the SIP/IP core network.

Step 105: after the terminating participation function entity receives a third success response message, it generates and sends a second success response message carrying the second response SDP datagram. The second success response message is routed to the originating participation function entity via the SIP/IP core network.

Step 106: after the originating participation function entity receives a second success response message, it generates and sends a first success response message carrying the first response SDP datagram. The first success response message is routed to the CPM client at the transmitting side via the SIP/IP core network.

Using the first, second, and third SDP datagrams carried in the first, second and third session invite messages and/or the first, second and third response SDP datagrams carried in the first, second and third success response messages, the negotiation of the MSRP connection parameters can be achieved between the CPM client at the transmitting side, the originating participation function entity, the terminating participation function entity and the CPM client at the receiving side. Specifically, several schemes will be described below.

Scheme one: the MSRP connection parameters of the transmitting side of each session invite message are carried by the SDP datagrams in the first, second or third session invite message. Thus, each receiving side of each session invite message can acquire the MSRP connection parameters of its transmitting side. That is, the CPM client at the transmitting side carries its MSRP connection parameter information by the first SDP datagram carried in the first session invite message; the originating participation function entity carries its MSRP connection parameter information by the second SDP datagram carried in the second session invite message; and the terminating participation function entity carries its MSRP connection parameter information by the third SDP datagram carried in the third SIP session invite message.

Scheme two: the MSRP connection parameters of the transmitting side of each response message are carried by the response SDP datagrams in the first, second or third success response message. Thus, each transmitting side of each session invite message can acquire the MSRP connection parameters of its receiving side. That is, the CPM client at the receiving side carries its MSRP connection parameter information by the third response SDP datagram carried in the third success response message; the terminating participation function entity carries its MSRP connection parameter information by the second response SDP datagram carried in the second success response message; and the originating participation function entity carries its MSRP connection parameter information by the first response SDP datagram carried in the first success response message.

Scheme three: the CPM client at the transmitting side and the CPM client at the receiving side acquire the MSRP connection parameters of network entities at their opposite sides respectively. That is, the originating participation function entity carries its MSRP connection parameter information by the first response SDP datagram carried in the first success response message; the terminating participation function entity carries its MSRP connection parameter information by the third SDP datagram carried in the third session invite message; and the originating participation function entity carries its MSRP connection parameter information by the second SDP datagram carried in the second session invite message. Or, the originating participation function entity carries its MSRP connection parameter information by the first response SDP datagram carried in the first success response message; the terminating participation function entity carries its MSRP connection parameter information by the third SDP datagram carried in the third session invite message; and the terminating participation function entity carries its MSRP connection parameter information by the second response SDP datagram carried in the second success response message.

Scheme four: each of the session invite messages and success response messages carry the MSRP connection parameters of the transmitting side of this message. The particular steps in Scheme four are similar to those in Scheme one and Scheme two, and will not be repeated herein.

FIG. 2 is a flow chart of negotiation of MSRP connection parameters in a SDP negation process of a large message mode CPM message in accordance with the present invention. A SIP/IP Core function node is omitted in FIG. 2. Actually, signaling transmission between every two function entities in this figure is implemented by a SIP/IP core network. The omission is not a limitation to the present invention.

As shown in FIG. 2, when a CPM client sends a large message mode CPM message to another CPM client, a process for negotiating the MSRP connection parameters mainly comprises the following steps.

Step 201: a CPM client at a transmitting side sends a session invite message (SIP INVITE) of the large message mode CPM message to another CPM client. The CPM client at the transmitting side carries a SDP datagram containing MSRP connection parameter information (including information of IP address, port number and/or URI) by the session invite message. The session invite message is routed to an originating participation function entity, i.e., a transmitting side belonged participation function entity, via a SIP/IP core network.

Step 202: the originating participation function entity receives the session invite message sent in step 201 and acts as a back to back user agent (B2BUA) to process the received message, generates and sends a new session invite message containing a SDP datagram, and carries its MSRP connection parameter information by the datagram.

Here, the MSRP connection parameters are an IP address and a port number, where the IP address can be carried using a SDP connection parameter row c-field, and the port number can be carried using a SDP media parameter row m-field.

If the MSRP connection parameter is a MSRP URI, the method for carrying the MSRP URI in the message comprises preserving a value of a path header field in the received SDP datagram into the SDP datagram, and adding a MSRP URI of the originating participation function entity to the most left side of the path header field in the SDP datagram; or carrying only the MSRP URI of the originating participation function entity in the path header field in the SDP datagram. The originating participation function entity sends the newly generated session invite message that is routed to the terminating participation function entity, i.e., a receiving side belonged participation function entity, via the SIP/IP core network.

If the MSRP connection parameters are the IP address, the port number and the MSRP URI, where the IP address can be carried using the SDP connection parameter row c-field and the port number can be carried using the SDP media parameter row m-field, the method for carrying the MSRP URI in the message comprises preserving a value of a path header field in the received SDP datagram into the SDP datagram, and adding a MSRP URI of the originating participation function entity to the most left side of the path header field in the SDP datagram; or carrying only the MSRP URI of the originating participation function entity in the path header field in the SDP datagram;. The originating participation function entity sends the newly generated session invite message that is routed to the terminating participation function entity, i.e., a receiving side belonged participation function entity, via the SIP/IP core network.

Step 203: the terminating participation function entity receives the session invite message sent in step 202 and acts as a B2BUA to process the received message, generates and sends a new session invite message carrying a SDP datagram, and carries its MSRP connection parameter information by the datagram.

Here, the MSRP connection parameters are an IP address and a port number, wherein the IP address can be carried using the SDP connection parameter row c-field and the port number can be carried using the SDP media parameter row m-field.

If the MSRP connection parameter is a MSRP URI, the method for carrying the MSRP URI in the message comprises preserving a value of a path header field in the received SDP datagram into the SDP datagram, and adding a MSRP URI of the terminating participation function entity to the most left side of the path header field in the SDP datagram; or only carrying the MSRP URI of the terminating participation function entity in the path header field in the SDP datagram. The terminating participation function entity sends the newly generated session invite message that is routed to the CPM client at the receiving side via the SIP/IP core network.

If the MSRP connection parameters are the IP address, the port number and the MSRP URI, where the IP address can be carried using the SDP connection parameter row c-field and the port number can be carried suing the SDP media parameter row m-field, the method for carrying the MSRP URI in the message comprises preserving a value of a path header field in the received SDP datagram into the SDP datagram, and adding a MSRP URI of the terminating participation function entity to the most left side of the path header field in the SDP datagram; or only carrying the MSRP URI of the terminating participation function entity in the path header field in the SDP datagram. The terminating participation function entity sends the newly generated session invite message that is routed to the CPM client at the receiving side via the SIP/IP core network.

Step 204: after the CPM client at the receiving side receives the session invite message sent in step 203, it sends a success response message SIP 200 OK carrying a response SDP datagram, and carries its MSRP connection parameter information by the datagram. The success response message is routed to the terminating participation function entity via the SIP/IP core network.

Step 205: after the terminating participation function entity receives the success response message sent in step 204, it acts as a B2BUA to process the received message, generates and sends a new success response message SIP 200 OK carrying a SDP datagram, and carries its MSRP connection parameter information by the datagram.

Here, the MSRP connection parameters are an IP address and a port number, wherein the IP address can be carried suing the SDP connection parameter row c-field and the port number can be carried suing the SDP media parameter row m-field.

If the MSRP connection parameter is a MSRP URI, the method for carrying the MSRP URI by the SDP datagram may comprise preserving a value of the received path header field into the sent SDP datagram, and adding a MSRP URI of the present function entity to the most left side of the path header field; or only carrying the MSRP URI of the present function entity in the path header field in the success response message. The success response message is routed to the originating participation function entity via the SIP/IP core network.

If the MSRP connection parameters are an IP address, a port number and a MSRP URI, where the IP address can be carried using the SDP connection parameter row c-field and the port number can be carried using the SDP media parameter row m-field, the method for carrying the MSRP URI by the SDP may comprise preserving a value of the received path header field into the sent SDP datagram, and adding a MSRP URI of the present function entity to the most left side of the path header field; or only carrying the MSRP URI of the present function entity in the path header field in the success response message. The success response message is routed to the originating participation function entity via the SIP/IP core network.

Step 206: after the originating participation function entity receives the response message sent in step 205 and acts as a B2BUA to process the received message, it generates and sends a new success response message SIP 200 OK carrying a SDP datagram, and carries its MSRP connection parameter information by the datagram.

Here, the MSRP connection parameters are an IP address and a port number, wherein the IP address can be carried using the SDP connection parameter row c-field and the port number can be carried using the SDP media parameter row m-field.

If the MSRP connection parameter is a MSRP URI, the method for carrying the MSRP URI by the SDP datagram may comprise preserving a value of the received path header field into the sent SDP datagram, and adding a MSRP URI of the present function entity to the most left side of the path header field; or only carrying the MSRP URI of the present function entity in the path header field in the success response message. The success response message is routed to the CPM client at the transmitting side via the SIP/IP core network.

If the MSRP connection parameters are an IP address, a port number and a MSRP URI, where the IP address can be carried using the SDP connection parameter row c-field and the port number can be carried using the SDP media parameter row m-field, the method for carrying the MSRP URI by the SDP datagram may comprise preserving a value of the received path header field into the sent SDP datagram, and adding a MSRP URI of the present function entity to the most left side of the path header field; or only carrying the MSRP URI of the present function entity in the path header field in the success response message. The success response message is routed to the CPM client at the transmitting side via the SIP/IP core network.

### The first embodiment

Taking carrying a MSRP URI for an example, this embodiment assume that a CPM client at a transmitting side is CPM Client A, an effective binding address of which is CPM Address A, i.e., a transmitting side belonged Participating Function Entity A, and that a CPM client at a receiving side is CPM Client B, an effective binding address of which is CPM Address B, i.e., a receiving side belonged Participating Function Entity B.

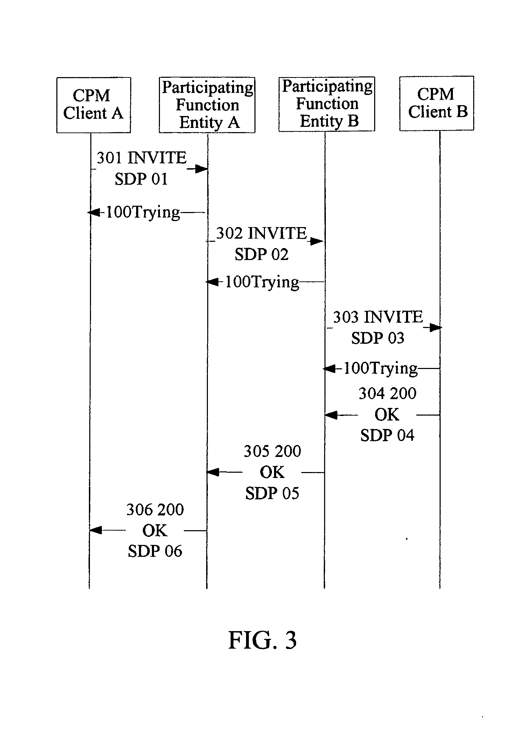

FIG. 3 is a flow chart of a method for negotiating MSRP connection parameters in accordance with the first embodiment of the present invention. As shown in FIG. 3, in the first embodiment, when CPM Client A sends a large message mode CPM message to CPM Client B, if the message carries a MSRP URI, the required process for negotiating the MSRP URI mainly comprises the following steps.

Step 301: CPM Client A sends a session invite message carrying a SDP datagram to CPM Client B (a Request-URI is CPM Address B), and carries its MSRP URI by the SDP datagram.

In the session invite message sent in this step, the MSRP URI contained in the path header information in the SDP datagram is as follows:
a=path: msrps://A.example.com/aaaaaa;tcp

This session invite message is routed to Participating Function Entity A via a SIP/IP core network.

Step 302: Participating Function Entity A receives the session invite message, generates and sends a new session invite message carrying the SDP datagram, and carries its MSRP URI by the datagram.

In the session invite message sent in this step, the MSRP URI contained in the path header information in the SDP datagram is as follows:
a=path: msrps://PFA.example.com/pfapfa;tcp
or
a=path: msrps://PFA.example.com/pfapfa;tcp \
a=path: msrps://A.example.com/aaaaaa;tcp

This session invite message is routed to Participating Function Entity B via a SIP/IP core network.

Step 303: Participating Function Entity B receives the session invite message, generates and sends a new session invite message carrying the SDP datagram, and carries its MSRP URI by the datagram.

In the session invite message sent in this step, the MSRP URI contained in the path header information in the SDP datagram is as follows:
a=path: msrps://PFB.example.com/pfbpfb;tcp
or
a=path: msrps://PFB.example.com/pfbpfb;tcp \
a=path: msrps://PFA.example.com/pfapfa;tcp \
a=path: msrps://A.example.com/aaaaaa;tcp

This session invite message is routed to Participating Function Entity B via a SIP/IP core network.

Step 304: CPM Client B receives the session invite message and sends a session invite message response message SIP 200 OK carrying a response SDP datagram, and carries its MSRP URI by the datagram.

In the response message sent in this step, the MSRP URI contained in the path header information in the SDP datagram is as follows:
a=path: msrps://B.example.com/bbbbbb;tcp

This session invite message is routed to Participating Function Entity B via a SIP/IP core network.

Step 305: Participating Function Entity B receives the response message SIP 200 OK carrying the response SDP datagram, generates and sends a new response message SIP 200 OK, and carries its MSRP URI by the datagram.

In the response message sent in this step, the MSRP URI contained in the path header information in the SDP datagram is as follows:
a=path: msrps://PFB.example.com/pfbpfb;tcp
or
a=path: msrps://PFB.example.com/pfbpfb;tcp \
msrps://B.example.com/bbbbbb;tcp

This session invite message is routed to Participating Function Entity A via a SIP/IP core network.

Step 306: Participating Function Entity A receives the response message SIP 200 OK carrying the response SDP datagram, generates and sends a new response message SIP 200 OK, and carries its MSRP URI by the datagram..

In the response message sent in this step, the MSRP URI contained in the path header information in the SDP datagram is as follows:
a=path: msrps://PFA.example.com/pfapfa;tcp
or
a=path: msrps://PFA.example.com/pfapfa;tcp \
msrps://PFB.example.com/pfbpfb;tcp \
msrps://B.example.com/bbbbbb;tcp

This session invite message is routed to Participating Function Entity A via a SIP/IP core network.

The negotiation of the MSRP connection parameters is described in the above embodiments, for example, the MSRP connection parameters carried in both the session invite message and the success response message are negotiated, or the MSRP connection parameters carried in either the session invite message or the success response message is negotiated, or the MSRP connection parameters acquired by the client at the transmitting side or the client at the receiving side from their opposite sides are negotiated.

The method for carrying a MSRP URI can a method for adding the MSRP URI by using per-hop or a method for exchanging the MSRP URI only between adjacent function entities.

In the method for carrying an IP address and a port number, the IP address may be carried using the SDP connection parameter row c-field and the port number may be carried using the media parameter row m-field.

As described above, using the technical scheme provided in the embodiments of the present invention, information is exchanged by carrying the SDP datagram in the session inviter message and the success response message of the large message mode CPM message so as to provide a solution to the negotiation of the MSRP connection parameters required to establish the media link between multiple network function entities.

The above description is only preferred embodiments of the present invention and is not intended to limit the present invention.

## Claims

1. A method for negotiating Message Session Relay Protocol, MSRP connection parameters , **characterized by** comprising:
completing the negotiation of the MSRP parameters via a session description protocol, SDP negotiation process between a sending Converged Internet Protocol Messaging, CPM client, an originating participation function entity, a terminating participation function entity and a recipient CPM client for establishing a MSRP multiple-hop transmission path, wherein the MSRP multiple-hop transmission path comprises a first transmission path between the sending CPM client and the originating participation function entity, a second transmission path between the originating participation function entity and the terminating participation function entity, and a third transmission path between the terminating participation function entity and the recipient CPM client;
wherein the SDP negotiation process comprises:
the sending CPM client sending (101, 201, 301) a first session invite message of a large message mode CPM message to the originating participation function entity, wherein the first session invite message carries a first SDP datagram, and the first SDP datagram carries MSRP connection parameter information of the sending CPM client;
after receiving the first session invite message, the originating participation function entity obtaining the MSRP connection parameter information of the sending CPM client from the first SDP datagram, generating and sending (102, 202, 302) a second session invite message to the terminating participation function entity, wherein the second session invite message carries a second SDP datagram, and the second SDP datagram carries MSRP connection parameter information of the originating participation function entity;
after receiving the second session invite message, the terminating participation function entity obtaining the MSRP connection parameter information of the originating participation function entity from the second SDP datagram, generating and sending (103, 203, 303) a third session invite message to the recipient CPM client, wherein the third session invite message carries a third SDP datagram, and the third SDP datagram carries MSRP connection parameter information of the terminating participation function entity;
after receiving the third session invite message, the recipient CPM client obtaining the MSRP connection parameter information of the terminating participation function entity, generating and sending (104, 204, 304) a third success response message to the terminating participation function entity, wherein the third success response message carries a third response SDP datagram, and the third response SDP datagram carries MSRP connection parameter information of the recipient CPM client;
after receiving the third success response message, the terminating participation function entity obtaining the MSRP connection parameter information of the recipient CPM client from the third response SDP datagram, generating and sending (105, 205, 305) a second success response message to the originating participation function entity, wherein the second success response message carries a second response SDP datagram, and the second response SDP datagram carries MSRP connection parameter information of the terminating participation function entity;
after receiving the second success response message, the originating participation function entity obtaining the MSRP connection parameter information of the terminating participation function entity from the second response SDP datagram, generating and sending (106, 206, 306) a first success response message to the sending CPM client, wherein the first success response message carries a first response SDP datagram, and the first response SDP datagram carries the MSRP connection parameter information of the originating participation function entity; and
the sending CPM client obtaining the MSRP connection parameter information of the originating participation function entity from the first response SDP datagram.

2. The method according to claim 1, wherein the first session invite message, the second session invite message, the third session invite message, the third success response message, the second success response message and the first success response message are routed via a Session Initiation Protocol, SIP/Internet Protocol, IP core network.

3. The method according to claim 1, wherein the MSRP connection parameters are a Uniform Resource Identifier, URI, an IP address and a port number.

4. The method according to claim 1, wherein a MSRP URI is carried in the second session invite message and the third session invite message, which means that:
a value of a path header field in the received first SDP datagram is preserved in the second SDP datagram, and a MSRP URI of the originating participation function entity is added to the most left side of the path header field in the second SDP datagram; a value of a path header field in the received second SDP datagram is preserved in the third SDP datagram, and a MSRP URI of the terminating participation function entity is added to the most left side of the path header field in the third SDP datagram.
or only the MSRP URI of the originating participation function entity is carried in the path header field in the second SDP datagram; and only the MSRP URI of the terminating participation function entity is carried in the path header field in the third SDP datagram.

5. The method according to claim 3, wherein the IP address is carried using a SDP connection parameter row c-field, and the port number is carried using a SDP media parameter row m-field;
a MSRP URI is carried in the second session invite message and the third session invite message, which means that:
a value of a path header field in the received first SDP datagram is preserved in the second SDP datagram, and a MSRP URI of the originating participation function entity is added to the most left side of the path header field in the second SDP datagram; a value of a path header field in the received second SDP datagram is preserved in the third SDP datagram, and a MSRP URI of the terminating participation function entity is added to the most left side of the path header field in the third SDP datagram.
or only the MSRP URI of the originating participation function entity is carried in the path header field in the second SDP datagram; and only the MSRP URI of the terminating participation function entity is carried in the path header field in the third SDP datagram.

6. The method according to claim 1, wherein a MSRP URI is carried in the second success response message and the first success response message, which means that:
a value of a path header field in the received third response SDP datagram is preserved in the second response SDP datagram, and a MSRP URI of the terminating participation function entity is added to the most left side of the path header field in the second response SDP datagram; a value of a path header field in the received second response SDP datagram is preserved in the first response SDP datagram, and a MSRP URI of the originating participation function entity is added to the most left side of the path header field in the first SDP datagram;
or only the MSRP URI of the terminating participation function entity is carried in the path header field in the second response SDP datagram; and only the MSRP URI of the originating participation function entity is carried in the path header field in the first response SDP datagram.

7. The method according to claim 3, wherein the IP address is carried using a SDP connection parameter row c-field, and the port number is carried using a SDP media parameter row m-field;
a MSRP URI is carried in the second success response message and the first success response message, which means that:
a value of a path header field in the received third response SDP datagram is preserved in the second response SDP datagram, and a MSRP URI of the terminating participation function entity is added to the most left side of the path header field in the second response SDP datagram; a value of a path header field in the received second response SDP datagram is preserved in the first response SDP datagram, and a MSRP URI of the originating participation function entity is added to the most left side of the path header field in the first SDP datagram;
or only the MSRP URI of the terminating participation function entity is carried in the path header field in the second response SDP datagram; and only the MSRP URI of the originating participation function entity is carried in the path header field in the first response SDP datagram.

8. The method according to claim 1, wherein the IP address is carried using a SDP connection parameter row c-field, and the port number is carried using a SDP media parameter row m-field.

## Patentansprüche

1. Verfahren zum Negoziieren von Message Session Relay Protocol (MSRP)-Verbindungsparametern, **dadurch gekennzeichnet, dass** es Folgendes umfasst:
Vollenden der Negoziierung der MSRP-Parameter über einen Session Description Protocol (SDP)-Negoziierungsprozess zwischen einem sendenden Converged Internet Protocol Messaging (CPM)-Client, einer originierenden Teilnahmefunktionsentität, einer terminierenden Teilnahmefunktionsentität und einem Empfänger-CPM-Client zum Herstellen eines MSRP-Mehrsprungübertragungspfades, wobei der MSRP-Mehrsprungübertragungspfad Folgendes umfasst: einen ersten Übertragungspfad zwischen dem sendenden CPM-Client und dem originierenden Teilnahmefunktionsentität, einen zweiten Übertragungspfad zwischen der originierenden Teilnahmefunktionsentität und der terminierenden Teilnahmefunktionsentität, und einen dritten Übertragungspfad zwischen der terminierenden Teilnahmefunktionsentität und dem Empfänger-CPM-Client;
wobei der SDP-Negoziierungsprozess Folgendes umfasst:
der sendende CPM-Client sendet (101, 201, 301) eine erste Sitzungsaufforderungsnachricht einer Large Message Mode CPM-Nachricht an die originierende Teilnahmefunktionsentität, wobei die erste Sitzungsaufforderungsnachricht ein erstes SDP-Datagramm transportiert und das erste SDP-Datagramm MSRP-Verbindungsparameter-Informationen des sendenden CPM-Client transportiert;
nach dem Empfangen der ersten Sitzungsaufforderungsnachricht generiert und sendet (102, 202, 302) die originierende Teilnahmefunktionsentität, die die MSRP-Verbindungsparameter-Informationen des sendenden CPM-Client aus dem ersten SDP-Datagramm erhält, eine zweite Sitzungsaufforderungsnachricht an die terminierende Teilnahmefunktionsentität, wobei die zweite Sitzungsaufforderungsnachricht ein zweites SDP-Datagramm transportiert, und das zweite SDP-Datagramm MSRP-Verbindungsparameter-Informationen der originierenden Teilnahmefunktionsentität transportiert;
nach dem Empfangen der zweiten Sitzungsaufforderungsnachricht generiert und sendet (103, 203, 303) die terminierende Teilnahmefunktionsentität, die die MSRP-Verbindungsparameter-Informationen der originierenden Teilnahmefunktionsentität aus dem zweiten SDP-Datagramm erhalten hat, eine dritte Sitzungsaufforderungsnachricht an den Empfänger-CPM-Client, wobei die dritte Sitzungsaufforderungsnachricht ein drittes SDP-Datagramm transportiert, und das dritte SDP-Datagramm MSRP-Verbindungsparameter-Informationen der terminierenden Teilnahmefunktionsentität transportiert;
nach dem Empfangen der dritten Sitzungsaufforderungsnachricht generiert und sendet (104, 204, 304) der Empfänger-CPM-Client, der die MSRP-Verbindungsparameter-Informationen der terminierenden Teilnahmefunktionsentität erhält, eine dritte Erfolgsantwortnachricht an die terminierende Teilnahmefunktionsentität, wobei die dritte Erfolgsantwortnachricht ein drittes Antwort-SDP-Datagramm transportiert, und das dritte Antwort-SDP-Datagramm MSRP-Verbindungsparameter-Informationen des Empfänger-CPM-Client transportiert;
nach dem Empfangen der dritten Erfolgsantwortnachricht generiert und sendet (105, 205, 305) die terminierende Teilnahmefunktionsentität, die die MSRP-Verbindungsparameter-Informationen der EmpfängerCPM-Client aus dem dritten Antwort-SDP-Datagramm erhält, eine zweite Erfolgsantwortnachricht an die originierende Teilnahmefunktionsentität, wobei die zweite Erfolgsantwortnachricht ein zweites Antwort-SDP-Datagramm transportiert, und das zweite Antwort-SDP-Datagramm MSRP-Verbindungsparameter-Informationen der terminierenden Teilnahmefunktionsentität transportiert;
nach dem Empfangen der zweiten Erfolgsantwortnachricht generiert und sendet (106, 206, 306) die originierende Teilnahmefunktionsentität, die die MSRP-Verbindungsparameter-Informationen der terminierenden Teilnahmefunktionsentität aus dem zweiten Antwort-SDP-Datagramm erhält, eine erste Erfolgsantwortnachricht an den sendenden CPM-Client, wobei die erste Erfolgsantwortnachricht ein erstes Antwort-SDP-Datagramm transportiert, und das erste Antwort-SDP-Datagramm die MSRP-Verbindungsparameter-Informationen der originierenden Teilnahmefunktionsentität transportiert; und
der sendende CPM-Client erhält die MSRP-Verbindungsparameter-Informationen der originierenden Teilnahmefunktionsentität aus dem ersten Antwort-SDP-Datagramm.

2. Verfahren nach Anspruch 1, wobei die erste Sitzungsaufforderungsnachricht, die zweite Sitzungsaufforderungsnachricht, die dritte Sitzungsaufforderungsnachricht, die dritte Erfolgsantwortnachricht, die zweite Erfolgsantwortnachricht und die erste Erfolgsantwortnachricht über ein Session Initiation Protocol (SIP)/Internet Protocol (IP)-Kernnetz geroutet werden.

3. Verfahren nach Anspruch 1, wobei die MSRP-Verbindungsparameter ein Uniform Resource Identifier (URI), eine IP-Adresse und eine Portnummer sind.

4. Verfahren nach Anspruch 1, wobei ein MSRP-URI in der zweiten Sitzungsaufforderungsnachricht und der dritten Sitzungsaufforderungsnachricht transportiert wird, was bedeutet, dass:
ein Wert eines Pfad-Header-Feldes in dem empfangenen ersten SDP-Datagramm in dem zweiten SDP-Datagramm beibehalten wird, und ein MSRP-URI der originierenden Teilnahmefunktionsentität zur äußerst linken Seite des Pfad-Header-Feldes in dem zweiten SDP-Datagramm hinzugefügt wird; ein Wert eines Pfad-Header-Feldes in dem empfangenen zweiten SDP-Datagramm in dem dritten SDP-Datagramm beibehalten wird, und ein MSRP-URI der terminierenden Teilnahmefunktionsentität zur äußerst linken Seite des Pfad-Header-Feldes in dem dritten SDP-Datagramm hinzugefügt wird,
oder nur der MSRP-URI der originierenden Teilnahmefunktionsentität in dem Pfad-Header-Feld in dem zweiten SDP-Datagramm transportiert wird; und nur der MSRP-URI der terminierenden Teilnahmefunktionsentität in dem Pfad-Header-Feld in dem dritten SDP-Datagramm transportiert wird.

5. Verfahren nach Anspruch 3, wobei die IP-Adresse unter Verwendung eines SDP-Verbindungsparameter-Reihe-c-Feldes transportiert wird und die Portnummer unter Verwendung eines SDP-Medienparameter-Reihe-m-Feldes transportiert wird;
ein MSRP-URI in der zweiten Sitzungsaufforderungsnachricht und der dritten Sitzungsaufforderungsnachricht transportiert wird, was bedeutet, dass:
ein Wert eines Pfad-Header-Feldes in dem empfangenen ersten SDP-Datagramm in dem zweiten SDP-Datagramm beibehalten wird, und ein MSRP-URI der originierenden Teilnahmefunktionsentität zur äußerst linken Seite des Pfad-Header-Feldes in dem zweiten SDP-Datagramm hinzugefügt wird; ein Wert eines Pfad-Header-Feldes in dem empfangenen zweiten SDP-Datagramm in dem dritten SDP-Datagramm beibehalten wird, und ein MSRP-URI der terminierenden Teilnahmefunktionsentität zur äußerst linken Seite des Pfad-Header-Feldes in dem dritten SDP-Datagramm hinzugefügt wird,
oder nur der MSRP-URI der originierenden Teilnahmefunktionsentität in dem Pfad-Header-Feld in dem zweiten SDP-Datagramm transportiert wird; und nur der MSRP-URI der terminierenden Teilnahmefunktionsentität in dem Pfad-Header-Feld in dem dritten SDP-Datagramm transportiert wird.

6. Verfahren nach Anspruch 1, wobei ein MSRP-URI in der zweiten Erfolgsantwortnachricht und der ersten Erfolgsantwortnachricht transportiert wird, was bedeutet, dass:
ein Wert eines Pfad-Header-Feldes in dem empfangenen dritten Antwort-SDP-Datagramm in dem zweiten Antwort-SDP-Datagramm beibehalten wird, und ein MSRP-URI der terminierenden Teilnahmefunktionsentität zur äußerst linken Seite des Pfad-Header-Feldes in dem zweiten Antwort-SDP-Datagramm hinzugefügt wird; ein Wert eines Pfad-Header-Feldes in dem empfangenen zweiten Antwort-SDP-Datagramm in dem ersten Antwort-SDP-Datagramm beibehalten wird, und ein MSRP-URI der originierenden Teilnahmefunktionsentität zur äußerst linken Seite des Pfad-Header-Feldes in dem ersten SDP-Datagramm hinzugefügt wird;
oder nur der MSRP-URI der terminierenden Teilnahmefunktionsentität in dem Pfad-Header-Feld in dem zweiten Antwort-SDP-Datagramm transportiert wird; und nur der MSRP-URI der originierenden Teilnahmefunktionsentität in dem Pfad-Header-Feld in dem ersten Antwort-SDP-Datagramm transportiert wird.

7. Verfahren nach Anspruch 3, wobei die IP-Adresse unter Verwendung eines SDP-Verbindungsparameter-Reihe-c-Feldes transportiert wird, und die Portnummer unter Verwendung eines SDP-Medienparameter-Reihe-m-Feldes transportiert wird;
ein MSRP-URI in der zweiten Erfolgsantwortnachricht und der ersten Erfolgsantwortnachricht transportiert wird, was bedeutet, dass:
ein Wert eines Pfad-Header-Feldes in dem empfangenen dritten Antwort-SDP-Datagramm in dem zweiten Antwort-SDP-Datagramm beibehalten wird, und ein MSRP-URI der terminierenden Teilnahmefunktionsentität zur äußerst linken Seite des Pfad-Header-Feldes in dem zweiten Antwort-SDP-Datagramm hinzugefügt wird; ein Wert eines Pfad-Header-Feldes in dem empfangenen zweiten Antwort-SDP-Datagramm in dem ersten Antwort-SDP-Datagramm beibehalten wird, und ein MSRP-URI der originierenden Teilnahmefunktionsentität zur äußerst linken Seite des Pfad-Header-Feldes in dem ersten SDP-Datagramm hinzugefügt wird;
oder nur der MSRP-URI der terminierenden Teilnahmefunktionsentität in dem Pfad-Header-Feld in dem zweiten Antwort-SDP-Datagramm transportiert wird; und nur der MSRP-URI der originierenden Teilnahmefunktionsentität in dem Pfad-Header-Feld in dem ersten Antwort-SDP-Datagramm transportiert wird.

8. Verfahren nach Anspruch 1, wobei die IP-Adresse unter Verwendung eines SDP-Verbindungsparameter-Reihe-c-Feldes transportiert wird, und die Portnummer unter Verwendung eines SDP-Medienparameter-Reihe-m-Feldes transportiert wird.

## Revendications

1. Procédé de négociation de paramètres de connexion de protocole de relais de session de message, MSRP, **caractérisé en ce qu'**il comprend :
l'exécution de la négociation des paramètres MSRP par l'intermédiaire d'un processus de négociation de protocole de description de session, SDP, entre un client de messagerie de protocole Internet convergente, CPM, émetteur, une entité de fonction de participation d'origine, une entité de fonction de participation de terminaison et un client CPM destinataire pour établir une voie de transmission à sauts multiples MSRP, dans lequel la voie de transmission à sauts multiples MSRP comprend une première voie de transmission entre le client CPM émetteur et l'entité de fonction de participation d'origine, une deuxième voie de transmission entre l'entité de fonction de participation d'origine et l'entité de fonction de participation de terminaison, et une troisième voie de transmission entre l'entité de fonction de participation de terminaison et le client CPM destinataire ;
dans lequel le processus de négociation SDP comprend :
le client CPM émetteur envoyant (101, 201, 301) un premier message d'invitation de session d'un message CPM en mode de grand message à l'entité de fonction de participation d'origine, dans lequel le premier message d'invitation de session porte un premier datagramme SDP, et le premier datagramme SDP porte des informations de paramètres de connexion MSRP du client CPM émetteur ;
après la réception du premier message d'invitation de session, l'entité de fonction de participation d'origine obtenant les informations de paramètres de connexion MSRP du client CPM émetteur à partir du premier datagramme SDP, générant et envoyant (102, 202, 302) un deuxième message d'invitation de session à l'entité de fonction de participation de terminaison, dans lequel le deuxième message d'invitation de session porte un deuxième datagramme SDP, et le deuxième datagramme SDP porte des informations de paramètres de connexion MSRP de l'entité de fonction de participation d'origine ;
après la réception du deuxième message d'invitation de session, l'entité de fonction de participation de terminaison obtenant les informations de paramètres de connexion MSRP de l'entité de fonction de participation d'origine à partir du deuxième datagramme SDP, générant et envoyant (103, 203, 303) un troisième message d'invitation de session au client CPM destinataire, dans lequel le troisième message d'invitation de session porte un troisième datagramme SDP, et le troisième datagramme SDP porte des informations de paramètres de connexion MSRP de l'entité de fonction de participation de terminaison ;
après la réception du troisième message d'invitation de session, le client CPM destinataire obtenant les informations de paramètres de connexion MSRP de l'entité de fonction de participation de terminaison, générant et envoyant (104, 204, 304) un troisième message de réponse de réussite à l'entité de fonction de participation de terminaison, dans lequel le troisième message de réponse de réussite porte un troisième datagramme SDP de réponse, et le troisième datagramme SDP de réponse porte des informations de paramètres de connexion MSRP du client CPM destinataire ;
après la réception du troisième message de réponse de réussite, l'entité de fonction de participation de terminaison obtenant les informations de paramètres de connexion MSRP du client CPM destinataire à partir du troisième datagramme SDP de réponse, générant et envoyant (105, 205, 305) un deuxième message de réponse de réussite à l'entité de fonction de participation d'origine, dans lequel le deuxième message de réponse de réussite porte un deuxième datagramme SDP de réponse, et le deuxième datagramme SDP de réponse porte des informations de paramètres de connexion MSRP de l'entité de fonction de participation de terminaison ;
après la réception du deuxième message de réponse de réussite, l'entité de fonction de participation d'origine obtenant les informations de paramètres de connexion MSRP de l'entité de fonction de participation de terminaison à partir du deuxième datagramme SDP de réponse, générant et envoyant (106, 206, 306) un premier message de réponse de réussite au client CPM émetteur, dans lequel le premier message de réponse de réussite porte un premier datagramme SDP de réponse, et le premier datagramme SDP de réponse porte les informations de paramètres de connexion MSRP de l'entité de fonction de participation d'origine ; et
le client CPM émetteur obtenant les informations de paramètres de connexion MSRP de l'entité de fonction de participation d'origine à partir du premier datagramme SDP de réponse.

2. Procédé selon la revendication 1, dans lequel le premier message d'invitation de session, le deuxième message d'invitation de session, le troisième message d'invitation de session, le troisième message de réponse de réussite, le deuxième message de réponse de réussite et le premier message de réponse de réussite sont acheminés par l'intermédiaire d'un réseau de coeur de protocole d'ouverture de session, SIP/protocole Internet, IP.

3. Procédé selon la revendication 1, dans lequel les paramètres de connexion MSRP sont un identifiant de ressource uniforme, URI, une adresse IP et un numéro de port.

4. Procédé selon la revendication 1, dans lequel un URI de MSRP est porté dans le deuxième message d'invitation de session et le troisième message d'invitation de session, ce qui signifie que :
une valeur d'un champ d'en-tête de voie dans le premier datagramme SDP reçu est préservée dans le deuxième datagramme SDP, et un URI de MSRP de l'entité de fonction de participation d'origine est ajouté au côté le plus à gauche du champ d'en-tête de voie dans le deuxième datagramme SDP ; une valeur d'un champ d'en-tête de voie dans le deuxième datagramme SDP reçu est préservée dans le troisième datagramme SDP, et un URI de MSRP de l'entité de fonction de participation de terminaison est ajouté au côté le plus à gauche du champ d'en-tête de voie dans le troisième datagramme SDP ;
ou uniquement l'URI de MSRP de l'entité de fonction de participation d'origine est porté dans le champ d'en-tête de voie du deuxième datagramme SDP ; et uniquement l'URI de MSRP de l'entité de fonction de participation de terminaison est porté dans le champ d'entête de voie dans le troisième datagramme SDP.

5. Procédé selon la revendication 3, dans lequel l'adresse IP est portée en utilisant un champ c de rangée de paramètres de connexion SDP, et le numéro de port est porté en utilisant un champ m de rangée de paramètres de support SDP ;
un URI de MSRP est porté dans le deuxième message d'invitation de session et le troisième message d'invitation de session, ce qui signifie que :
une valeur d'un champ d'en-tête de voie dans le premier datagramme SDP reçu est préservée dans le deuxième datagramme SDP, et un URI de MSRP de l'entité de fonction de participation d'origine est ajouté au côté le plus à gauche du champ d'en-tête de voie dans le deuxième datagramme SDP ; une valeur d'un champ d'en-tête de voie dans le deuxième datagramme SDP reçu est préservée dans le troisième datagramme SDP, et un URI de MSRP de l'entité de fonction de participation de terminaison est ajouté au côté le plus à gauche du champ d'en-tête de voie dans le troisième datagramme SDP ;
ou uniquement l'URI de MSRP de l'entité de fonction de participation d'origine est porté dans le champ d'en-tête de voie dans le deuxième datagramme SDP ; et uniquement l'URI de MSRP de l'entité de fonction de participation de terminaison est porté dans le champ d'entête de voie dans le troisième datagramme SDP.

6. Procédé selon la revendication 1, dans lequel un URI de MSRP est porté dans le deuxième message de réponse de réussite et dans le premier message de réponse de réussite, ce qui signifie que :
une valeur d'un champ d'en-tête de voie dans le troisième datagramme SDP de réponse reçu est préservée dans le deuxième datagramme SDP de réponse, et un URI de MSRP de l'entité de fonction de participation de terminaison est ajouté au côté le plus à gauche du champ d'en-tête de voie dans le deuxième datagramme SDP de réponse ; une valeur d'un champ d'en-tête de voie dans le deuxième datagramme SDP de réponse reçu est préservée dans le premier datagramme SDP de réponse, et un URI de MSRP de l'entité de fonction de participation d'origine est ajouté au côté le plus à gauche du champ d'en-tête de voie dans le premier datagramme SDP ;
ou uniquement l'URI de MSRP de l'entité de fonction de participation de terminaison est porté dans le champ d'en-tête de voie dans le deuxième datagramme SDP de réponse ; et uniquement l'URI de MSRP de l'entité de fonction de participation d'origine est porté dans le champ d'en-tête de voie dans le premier datagramme SDP de réponse.

7. Procédé selon la revendication 3, dans lequel l'adresse IP est portée en utilisant un champ c de rangée de paramètres de connexion SDP, et le numéro de port est porté en utilisant un champ m de rangée de paramètres de support SDP ;
un URI de MSRP est porté dans le deuxième message de réponse de réussite et le premier message de réponse de réussite, ce qui signifie que :
une valeur d'un champ d'en-tête de voie dans le troisième datagramme SDP de réponse reçu est préservée dans le deuxième datagramme SDP de réponse, et un URI de MSRP de l'entité de fonction de participation de terminaison est ajouté au côté le plus à gauche du champ d'en-tête de voie dans le deuxième datagramme SDP de réponse ; une valeur d'un champ d'en-tête de voie dans le deuxième datagramme SDP de réponse reçu est préservée dans le premier datagramme SDP de réponse, et un URI de MSRP de l'entité de fonction de participation d'origine est ajouté au côté le plus à gauche du champ d'en-tête de voie dans le premier datagramme SDP ;
ou uniquement l'URI de MSRP de l'entité de fonction de participation de terminaison est porté dans le champ d'en-tête de voie dans le deuxième datagramme SDP de réponse ; et uniquement l'URI de MSRP de l'entité de fonction de participation d'origine est porté dans le champ d'en-tête de voie dans le premier datagramme SDP de réponse.

8. Procédé selon la revendication 1, dans lequel l'adresse IP est portée en utilisant un champ c de rangée de paramètres de connexion SDP, et le numéro de port est porté en utilisant un champ m de rangée de paramètres de support SDP.
